# EUROPEAN PATENT APPLICATION

(11) **EP 4 726 576 A1**
(43) Date of publication of application: **15.04.2026**
(21) Application number: 25207743.3
(22) Date of filing: 09.10.2025
(51) Int. Cl.: G06F 16/3329, G06F 16/783

(54) **VIDEO PROCESSING METHOD**

(30) Priority: 09.10.2024 US 202418911114
(71) Applicant: GOOGLE LLC, Mountain View CA 94043 (US)
(72) Inventor: WEISZ, Ágoston, 8002 Zürich (CH)
(74) Representative: Marks & Clerk GST

(57) **Abstract**

A computer-implemented video processing method which comprises receiving, at a question-answering system 100, a question input 6 conveying a question about a video, and initial video data comprising frames obtained from the video at a first frame rate. The method comprises determining, by the question-answering system 100, whether or not the question can be answered using the initial video data. If it is determined that the question can be answered using the initial video data then the method comprises determining, by the question answering system 100 a question-answering output 7 using the initial video data, wherein the question answering output conveys an answer to the question and outputting the question-answering output determined using the initial video data from the question-answering system.

## Description

### Technical field

The present invention relates to a computer-implemented video processing method.

### Background

Large Language Models (LLMs) are machine learning models that can be used to perform a diverse set of tasks. LLMs can process a natural language-based input received from a user and generate a response.

LLMs have been adapted or enhanced to handle other modalities including visual inputs such as image and video data.

It is known to provide LLM-based question-answering systems which answer questions about a video.

### Summary

In accordance with some embodiments described herein there is provided a computer-implemented video processing method, comprising receiving, at a question-answering system, a question input conveying a question about a video, and initial video data comprising frames obtained from the video at a first frame rate; determining, by the question-answering system, whether or not the question can be answered using the initial video data, and if it is determined that the question cannot be answered using the initial video data: receiving, at the question-answering system, further video data comprising frames obtained from the video at a second frame rate, wherein the second frame rate is higher than the first frame rate; and determining, by the question-answering system, a question-answering output, wherein the question-answering output conveys an answer to the question, wherein determining the question-answering output comprises the question-answering system processing the further video data; and outputting the question-answering output from the question-answering system.

The question-answering system may comprise a planner configured for requesting the further video data.

The computer-implemented video processing method may further comprise the planner identifying one or more parameters for the further video data.

The one or more parameters may identify one or more time segments of the video from which the frames obtained from the video at the second frame rate are to be extracted.

The one or more parameters may identify the second frame rate.

The computer-implemented video processing method may comprise the planner generating an output to request the further video data from a video content provision system, wherein the video content provision system is configured to extract frames from the video at the second frame rate.

The planner may comprise a Visual Language Model (VLM).

If it is determined that the question can be answered using the initial video data then the method may comprise determining, by the question answering system, a question-answering output using the initial video data, wherein the question answering output conveys an answer to the question; and outputting the question-answering output determined using the initial video data from the question-answering system.

The question-answering system may comprise a question-answering model. Determining, by the question-answering system, the question-answering output using the initial video data may comprise the question-answering model determining the answer to the question based on tokenized video data derived from the initial video data.

The question-answering system may comprise a question-answering model. The question-answering system processing the further video data may comprise the question-answering model determining the answer to the question based on tokenized video data derived from the further video data.

Determining whether or not the question can be answered using the initial video data may comprise the planner determining whether or not the question can be answered using the initial video data.

The question-answering system processing the further video data may comprise determining, by the question-answering system, whether or not the question can be answered using the further video data.

The question-answering system processing the further video data may comprise the planner determining whether or not the question can be answered using the further video data.

Processing the further video data may form part of an iterative loop. The iterative loop may comprise the planner identifying subsequent parameters for extracting subsequent frames from the video and the question-answering system receiving the subsequent frames and determining whether or not the question can be answered using the subsequent frames. The iterative loop may be performed until the question-answering system determines that the question can be answered using the subsequent frames.

Determining whether or not the question can be answered using the subsequent frames may comprise the planner determining whether or not the question can be answered using the subsequent frames.

The subsequent parameters may comprise a subsequent frame rate for extracting the frames from the video. Each time the iterative loop is performed the planner may increase the subsequent frame rate.

The subsequent frame rate may be higher than the second frame rate.

Each time the iterative loop is performed the planner may identify one or more time segments of the video from which the subsequent frames are to be extracted.

In accordance with some embodiments described herein there is provided a system comprising one or more computers and one or more storage devices storing instructions that when executed by the one or more computers cause the one or more computers to perform a video processing method comprising receiving, at a question-answering system, a question input conveying a question about a video, and initial video data comprising frames obtained from the video at a first frame rate; determining, by the question-answering system, whether or not the question can be answered using the initial video data, and if it is determined that the question cannot be answered using the initial video data receiving, at the question-answering system, further video data comprising frames obtained from the video at a second frame rate, wherein the second frame rate is higher than the first frame rate; and determining, by the question-answering system, a question-answering output, wherein the question-answering output conveys an answer to the question, wherein determining the question-answering output comprises the question-answering system processing the further video data; and outputting the question-answering output from the question-answering system.

In accordance with some embodiments described herein there is provided a computer program product comprising instructions which, when the program is executed by one or more computers cause the one or more computers to carry out a video processing method comprising receiving, at a question-answering system, a question input conveying a question about a video, and initial video data comprising frames obtained from the video at a first frame rate; determining, by the question-answering system, whether or not the question can be answered using the initial video data, and if it is determined that the question cannot be answered using the initial video data receiving, at the question-answering system, further video data comprising frames obtained from the video at a second frame rate, wherein the second frame rate is higher than the first frame rate; and determining, by the question-answering system, a question-answering output, wherein the question-answering output conveys an answer to the question, wherein determining the question-answering output comprises the question-answering system processing the further video data; and outputting the question-answering output from the question-answering system.

Particular embodiments of the subject matter described in this specification can be implemented so as to realize one or more of the following advantages.

In various implementations described in this specification, the frame rate of video data which is processed by a question-answering system is dynamically adjusted depending on whether or not the question can be answered using frames obtained from the video at a first frame rate. In this way, a higher frame rate may be used when necessary to answer the question, but otherwise a lower frame rate (e.g. first frame rate) may be used. Thus, the systems and methods described and/or contemplated herein can optimise the computational resources, e.g. memory, processing requirements, and energy consumption used by the question-answering system to process video data.

### Brief description of the drawings

Fig. 1 is a diagram showing an example system;
Fig. 2 is an example computer-implemented video processing method;
Fig. 3 is an example computer-implemented video processing method; and
Fig. 4 is an example computer-implemented video processing method.

### Detailed description

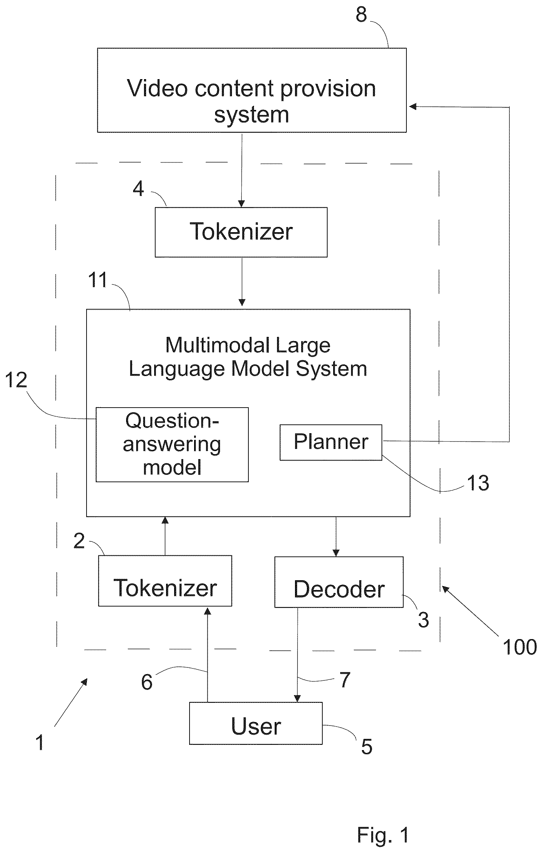

Fig. 1 is a diagram showing an example system 1. The system 1 may be implemented by one or more computers located in one or more locations. As used herein, the term computer includes any appropriate data processing hardware such as a personal computer, a server, a laptop, a mobile device, or any type of processing unit such as a CPU, GPU, TPU or specialized hardware apparatus such as an FPGA or ASIC.

The system 1 has a video content provision system 8 which is configured to extract frames from a video at a specified frame rate. Initially the specified frame rate is a first frame rate, for example 1 frame per second. The frames obtained from the video at the first frame rate may also be referred to herein as initial video data. The video content provision system 8 may comprise a video encoding system. The video content provision system 8 is capable of providing video data from the video to the question-answering system 100 at different frame rates.

The system 1 has a question-answering system 100 which is configured to receive the video data from the video content provision system 8.

In an embodiment, the question-answering system 100 has a tokenizer 4 for tokenizing the video data received by the question-answering system 100 from the video content provision system 8 to create tokenized video data. Tokenization of video frames is known, for example as described in "ViViT: A Video Vision Transformer" by Anurag Arnab, Mostafa Dehghani, Georg Heigold et al., 1 November 2021, arXiv:2103.15691. The tokenization of the video frames may take any suitable form.

The question-answering system 100 is additionally configured to receive a question input 6 conveying a natural language question from a user 5 about the video. The user can provide the question input 6 via a direct text input such as via a text box, a voice input or a file upload, for example. The question-answering system 100 has a tokenizer 2 for tokenizing the question to create tokenized question data.

The question-answering system 100 has a multimodal large language model system 11. The multimodal large language model system 11 comprises a multimodal large language model in the form of a question-answering model 12. The question-answering model 12 is configured for receiving and processing the tokenized video data and the tokenized question data to determine an answer to the question.

The question-answering system 100 has a decoder 3 for translating the output from the question-answering model 12 into a question-answering output 7 which conveys the answer to the question to the user 5.

The question-answering model 12 may comprises a Visual Language Model (VLM). In other words, the question-answering model 12 may be configured to handle both vision and language inputs. VLMs are known per se and examples of VLMs include GPT-4, as described in "GPT-4 Technical Report" from Open AI, published on 4 March 2024, arXiv:2303.08774; Flamingo as described in "Flamingo: a Visual Language model for Few-Shot Learning" by Jean-Baptiste Alayrac et al., published on 15 November 2022, arXiv:2204.14198; and PALI as described in "PALI: A jointly-scaled multilingual language-image model" published on 5 June 2023, by Xi Chen et al., arXiv:2209.06794.

More specifically, the question-answering model may comprise a VLM configured for video question answering. LLM-based video question answering systems known per se. See for example "Video Question Answering with Iterative Video-Text Co-Tokenization", published on 1 August 2022, arXiv:2208.0093, and the references cited therein.

The multimodal large language system 11 has a planner 13 for requesting further video data from the video. The planner 13 may comprise a Visual Language Model. In other words, the planner 13 is configured to handle both vision and language inputs. The planner 13 is configured for receiving and processing the tokenized video data. The planner 13 is configured for receiving and processing the tokenized question data.

The planner 13 is for generating and executing a plan for answering the question. The use of planners in large language model systems is known per se. See for example "AVIS: Autonomous Visual Information Seeking with Large Language Model Agent" by Ziniu Hu, Ahmet Iscen, Chen Sun et al. (Google Research and University of California, Los Angeles), 2 November 2023, arXiv:2306.08129; "Chameleon: Plug-and-Play Compositional Reasoning with Large Language Models" by Pan Lu, Baolin Peng, Hao Cheng, Michel Galley at al. (University of California, Los Angeles and Microsoft Research, Redmond), 31 October 2023, arXiv:2304.09842; and "MM-REACT: Prompting ChatGPT for Multimodal Reasoning and Action" by Zhengyuan Yang, Linjie Li, Jianfeng Wang, Kevin Lin, Ehsan Azarnasab, Faisal Ahmed et al. 20 March 2023, arXiv:2303.11381.

The planner 13 is configured by its training to determine whether or not the question can be answered using the initial video data. In determining whether or not the question can be answered using the initial video data the planner 13 receives and processes the tokenized video data. The tokenized video data is that created by the tokenizer 4 using the frames received at the first frame rate.

In determining whether or not the question can be answered using the initial video data the planner receives and processes the tokenized question data.

If the planner 13 determines that the question can be answered, then the question-answering model 12 determines the answer to the question using the initial video data. In determining the answer to the question using the initial video data the question-answering model processes the tokenized question data and the tokenized video data. The tokenized video data is that created using the frames received at the first frame rate. The answer to the question is then decoded by the decoder 3 and output to the user 5 in the question-answering output 7.

In another embodiment the question-answering model 12 may determine whether or not the question can be answered using the initial video data instead of the planner 13 determining whether or not the question can be answered using the initial video data.

In determining whether or not the question can be answered using the initial video data the question-answering model 12 receives and processes the tokenized video data. The tokenized video data is that created by the tokenizer 4 using the frames received at the first frame rate.

In determining whether or not the question can be answered using the initial video data the question-answering model 12 receives and processes the tokenized question data.

The question-answering system 100 answers the question using the frames obtained from the video at the first frame rate, if it is able to do so.

If the question-answering model 12 is able to answer the question using the initial video data then the step of the question answering model 12 determining whether or not the question can be answered using the initial video data may not be performed as a separate discreet step.

However, if the planner 13, or the question-answering model 12, determines that the question cannot be answered using the initial video data, i.e. the frames received at the first frame rate, then the planner 13 requests further video data from the video. The further video data comprises frames obtained from the video at a second frame rate.

The second frame rate is higher than the first frame rate. The second frame rate may be 10 frames per second, for example.

The planner 13 is configured by its training to identify one or more parameters for the further video data. For example, the one or more parameters may comprise the second frame rate. The one or more parameters may identify one or more time segments of the video from which the further frames are to be extracted by the video content provision system 8.

The planner 13 is configured to generate an output to request the further video data from the video content provision system 8. The output conveys the one or more parameters identified by the planner 13. The video content provision system 8 extracts the frames from the video, according to the one or more parameters, before sending the extracted frames to the question-answering system 100.

The output from the planner 13 to the video content provision system 8 may convey the start time and/or the end time of the or each time segment.

The output from the planner 13 to the video content provision system 8 may be an appropriate API call to invoke the required function of the video content provision system 8. In another example, the planner 13 or another component of the multimodal large language model system 11 can generate appropriate computer program code, such as Python code, for obtaining the frames from the video using the video content provision system 8.

As noted, the further video data which is received by the question-answering system 100 from the video content provision system 8 comprises frames obtained from the video at the second frame rate. The second frame rate is higher than the first frame rate.

In another embodiment, the further video data which is received by the question-answering system 100 comprises frames obtained from the video at the second frame rate, wherein the frames at the second frame rate are extracted only from the one or more time segments of the video as identified by the planner 13.

The question-answering system 100 processes the further video data. This may involve the question-answering model 12 determining the answer to the question using the further video data. The question-answering model 12 determines the answer to the question based on tokenized video data derived from the further video data. The question-answering model 12 processes the tokenized question data and the tokenized video data. The tokenized video data is that created using the frames obtained from the video at the second frame rate, and optionally according to any other parameters specified by the planner 13. The answer to the question is then decoded by the decoder 3 and output to the user 5 in the question-answering output 7.

The answer to the question may be the correct answer to the question or the answer to the question may be that the question cannot be answered.

When the question-answering system 100 processes the further video data this may involve the planner 13 determining whether or not the question can be answered using the further video data. In determining whether or not the question can be answered using the further video data the planner 13 receives and processes the tokenized video data. The tokenized video data is that created by the tokenizer 4 using the frames received at the second frame rate.

In determining whether or not the question can be answered using the further video data the planner 13 receives and processes the tokenized question data. The tokenized question data is that created by the tokenizer 2.

In another embodiment the question-answering model 12 may determine whether or not the question can be answered using the further video data instead of the planner 13 determining whether or not the question can be answered using the further video data.

In determining whether or not the question can be answered using the further video data the question-answering model 12 receives and processes the tokenized video data. The tokenized video data is that created by the tokenizer 4 using the frames received at the second frame rate.

In determining whether or not the question can be answered using the further video data the question-answering model 12 receives and processes the tokenized question data.

If the question-answering model 12 is able to answer the question using the further video data then the step of the question answering model 12 determining whether or not the question can be answered using the further video data may not be performed as a separate discreet step.

Optionally, processing the further video data forms part of an iterative loop. The iterative loop comprises the planner 13 identifying subsequent parameters for extracting subsequent frames from the video and the question-answering system 100 receiving the subsequent frames and determining if the question can be answered using the subsequent frames. The iterative loop is performed until the question-answering system 100 determines that the question can be answered using the subsequent frames. When the question can be answered then the question-answering model 12 answers the question using the subsequent frames.

The question-answering system, for example the question-answering model 12, determines the answer to the question using the subsequent frames. The question-answering system, for example the question-answering model 12, determines the answer to the question based on tokenized video data derived from the subsequent frames. The question-answering system, for example the question-answering model, determines the answer to the question additionally based on the tokenized question data.

The question-answering system 100 receiving the subsequent frames and determining if the question can be answered using the subsequent frames comprises the planner 13 determining if the question can be answered using the subsequent frames.

In determining whether or not the question can be answered using the subsequent frames, the planner 13 receives and processes the tokenized video data. The tokenized video data is derived from the subsequent frames.

In determining whether or not the question can be answered using the subsequent frames the planner 13 receives and processes the tokenized question data.

In another embodiment the question-answering model 12 may determine whether or not the question can be answered using the subsequent frames instead of the planner 13 determining whether or not the question can be answered using the subsequent frames.

In determining whether or not the question can be answered using the subsequent frames the question-answering model 12 receives and processes the tokenized video data. The tokenized video data is that created by the tokenizer 4 using the subsequent frames.

In determining whether or not the question can be answered using the subsequent frames the question-answering model 12 receives and processes the tokenized question data.

The planner 13 is configured to generate an output to request the subsequent frames from the video content provision system 8. The output conveys the one or more subsequent parameters identified by the planner 13. The video content provision system 8 extracts the frames from the video, according to the one or more parameters, before sending the extracted frames to the question-answering system 100.

The subsequent parameters may comprise a subsequent frame rate for extracting the frames from the video. In one embodiment, each time the iterative loop is performed, the planner increases the subsequent frame rate. The subsequent frame rate may be higher than the second frame rate.

The subsequent frames may be obtained from the entire video or only from one or more time segments of the video identified by the planner 13. In an embodiment, each time the iterative loop is performed the planner 13 identifies one or more time segments of the video from which the subsequent frames are to be extracted. The one or more time segments of the video may be new time segments which were not previously identified by the planner 13.

In an example situation, the user 5 may wish to ask questions about a video of a sporting event such as a soccer game or a fencing or tennis match. The question-answering system 100 answers the question using frames obtained from the video at the first frame rate, if it is able to do so. However, if the question cannot be answered, then the question-answering system 100 extracts frames from the video at a higher frame rate, and optionally from one or more selected time segments of the video, for answering the question.

Dynamically adjusting the frame rate of the video data which is received by the question-answering system 100 optimises the computational resources used to analyse the data from the video.

By requesting the further image frames from the selected time segment(s), rather than the entire video, the question-answering system 100 optimises the computational resources to analyse the data from the video.

The planner 13 may comprise a Visual Language Model which is fine-tuned for performing the tasks described above using an appropriate training data set. In particular, the planner may be fine-tuned for determining whether or not the question can be answered using the initial video data and/or the further video data and/or the subsequent frames. The planner 13 may be fine-tuned for identifying an appropriate second frame rate. The planner 13 may be fine-tuned for identifying the subsequent frame rate. The planner 13 may be fine-tuned for identifying the one or more selected time segments of the video from which the further frames are to be extracted. The fine tuning of the model is discussed in further detail below.

In another embodiment (not shown), the question-answering system 100 comprises an alternative planner which uses manually authored code. The alternative planner is not an VLM. The alternative planner performs some or all of the functions described herein in relation to the planner 13. In another embodiment (not shown) the question-answering system 100 comprises an alternative sub system which uses manually authored code for answering the question. The alternative sub system is not a VLM. The alternative sub system performs some or all of the functions described herein in relation to the question-answering model 12.

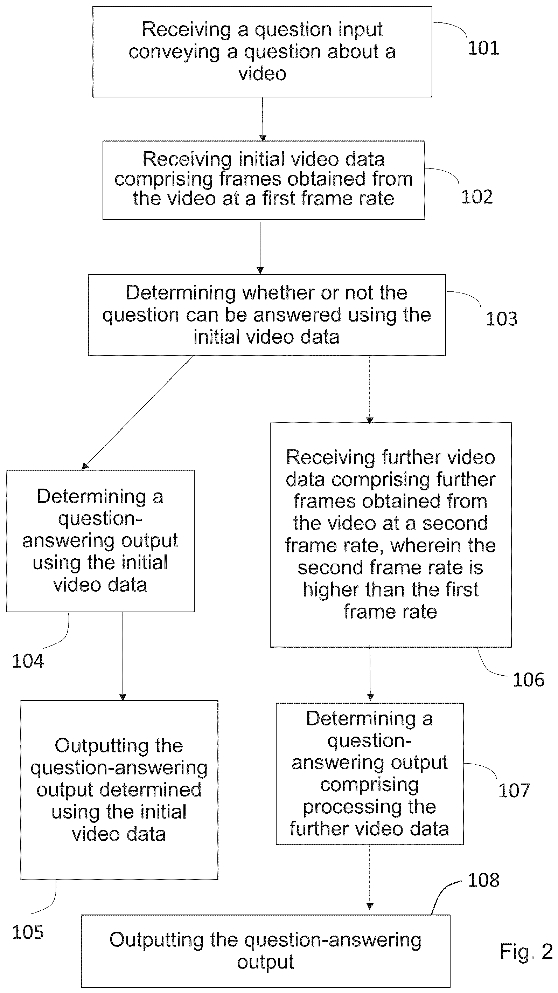

The question-answering system 100 is configured to perform any of the example methods show in Figs. 2, 3 and 4.

The video may be streamed to a server where it is sampled by the video content provision system 8.

In the example method of Fig. 2, the method comprises receiving a question input conveying a question about a video in step 101. The question input is received at the question-answering system 100. The method comprises receiving initial video data comprising frames obtained from the video at a first frame rate in step 102. The initial video data is received at the question-answering system 100.

The method comprises determining whether or not the question can be answered using the initial video data in step 103. This step is performed by the question-answering system 100. For example, step 103 may be performed by the planner 13 or the question-answering model 12.

If it is determined that the question can be answered using the initial video data then the method comprises determining a question-answering output using the initial video data in step 104. This step is performed by the question-answering system 100, for example by the question-answering model 12. The question-answering model 12 may determine the answer to the question based on tokenized video data derived from the initial video data.

The method then comprises outputting the question-answering output which was determined using the initial video data in step 105.

If the step of determining whether or not the question can be answered using the initial video data 103 is performed by the question-answering model 12 then when the question-answering model 12 is able to answer the question based on tokenized video data derived from the initial frames then the step of determining whether or not the question can be answered using the initial video data 103 may not be performed as a separate discreet step.

If it is determined that the question cannot be answered using the initial video data then the method comprises receiving further video data comprising further frames obtained from the video at a second frame rate, wherein the second frame rate is higher than the first frame rate, in step 106.

The method then comprises determining a question-answering output comprising processing the further video data in step 107. Processing the further video data may comprise a question-answering model 12 of the question-answering system 100 determining an answer to the question based on tokenized video data derived from the further video data.

The method then comprises outputting the question-answering output in step 108.

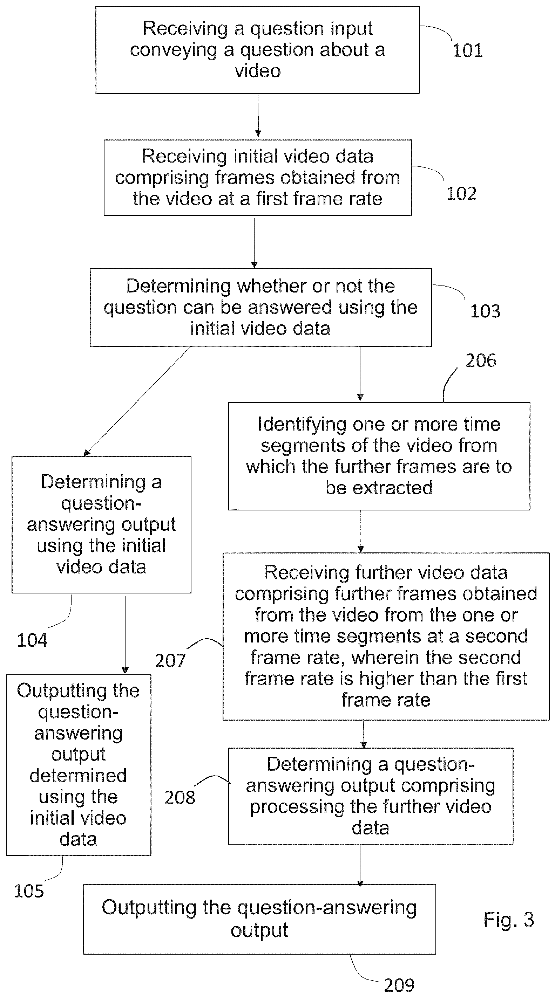

Fig. 3 relates to another example method. The method of Fig. 3 has corresponding features as described and/or contemplated in relation to Fig. 2.

In the method of Fig. 3, if it is determined that the question cannot be answered using the initial video data in step 103 then the method comprises identifying one or more time segments of the video from which the further frames are to be extracted in step 206.

The method comprises receiving the further video data comprising further frames obtained from the video from the one or more time segments at a second frame rate, wherein the second frame rate is higher than the first frame rate, in step 207.

The method then comprises determining a question-answering output comprising processing the further video data in step 208. Processing the further video data may comprise a question-answering model 12 of the question-answering system 100 determining an answer to the question using the further video data. The question-answering model 12 may determine the answer to the question based on tokenized video data derived from the further video data.

The method then comprises outputting the question-answering output in step 209.

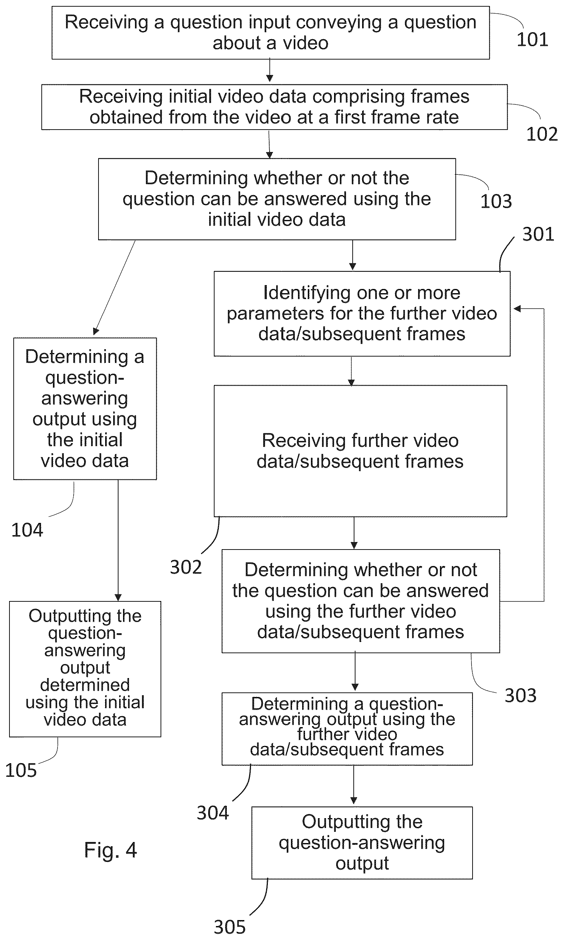

Fig. 4 relates to another example method. The method of Fig. 4 has corresponding features as described and/or contemplated in relation to Figs. 2 and 3.

The method of Fig. 4 comprises determining whether or not the question can be answered using the initial video data in step 103.

If it is determined that the question cannot be answered using the initial video data then the method comprises identifying one or more parameters for the further video data in step 301.

The method then comprises receiving further video at step 302. The further video data comprises further frames obtained from the video at a second frame rate, wherein the second frame rate is higher than the first frame rate.

If the one or more parameters for the further video data include one or more time segments of the video from which the further frames are to be extracted then the further video data comprises further frames obtained from the video from the one or more time segments at the second frame rate, wherein the second frame rate is higher than the first frame rate.

The method them comprises determining whether or not the question can be answered using the further video data in step 303.

If the question can be answered then the method comprises determining a question-answering output using the further video data in step 304. The question-answering output conveys an answer to the question. This step is performed by the question-answering system 100, for example by the question-answering model 12. The question-answering model 12 may determine the answer to the question based on tokenized video data derived from the further video data.

The method further comprises outputting the question-answering output in step 305.

If the question cannot be answered using the further video data in step 303 then an iterative loop is performed which comprises repeating steps 301 to 303 with subsequent frames instead of the further video data until it is determined that the question can be answered using the subsequent frames in step 303.

Each time the iterative loop is performed the subsequent frame rate may be increased. The subsequent frame rate may be higher than the second frame rate.

Each time the iterative loop is performed one or more time segments of the video may be identified from which the subsequent frames are to be extracted.

When it is determined that the question can be answered using the subsequent frames in step 303 then the method comprises determining a question-answering output using the subsequent frames in step 304. This step is performed by the question-answering system 100, for example by the question-answering model 12. The question-answering model 12 may determine the answer to the question based on tokenized video data derived from the subsequent frames.

The method further comprises outputting the question-answering output in step 305.

### Training

In some examples described and/or contemplated herein the planner 13 is a VLM. The planner 13 may be fine-tuned using human-labelled data.

The human-labelled data provides examples of whether or not a question about a video can be answered using frames obtained from the video at the first frame rate, for example 1 frame per second. The human-labelled data provides examples of whether or not a question about a video can be answered using frames obtained from the video at the second frame rate, for example 10 frames per second. The human-labelled data provides examples of whether or not a question about a video can be answered using frames obtained from the video at subsequent frame rates.

The human-labelled data provides examples of a second frame rate to use for obtaining further frames from the video for answering the question.

The human-labelled data provides examples of subsequent frame rates to use for obtaining subsequent frames from the video for answering the question.

The human-labelled data provides examples of one or more selected time segments of a video from which the further and/or subsequent frames are to be extracted.

The planner 13 is fine-tuned using a technique such as Low Rank Adaptation (LoRA) although other fine-tuning techniques could be used.

By way of example, the question may be "who won the point in the fencing match" about a video of a fencing match. The human-labelled data may indicate that the question cannot be answered using frames from the video obtained at a first frame rate. The human-labelled data may indicate one or more time segments of the video for extracting the further video data. The human-labelled data may indicate a second frame rate at which to extract the further video data from the video.

The embodiments and functional operations described in this specification can be implemented in various forms, including digital electronic circuitry, software, firmware, programmable computing hardware, or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

As used herein, the term "computer" refers to the physical components involved in data processing and encompasses all types of devices and machines used for this purpose. Examples include processors or processing units, multiple processors working together, graphics processing units (GPUs), tensor processing units (TPUs), and specialized processing hardware such as field-programmable gate arrays (FPGAs) or application-specific integrated circuits (ASICs). In addition to hardware, a computer may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning.

The processes and logic flows described in this specification can be executed by one or more programmable computers running one or more computer programs to perform functions by operating on input data and generating output. In some cases, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The essential elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

The various embodiments described herein are presented for the purpose of illustration and description. These embodiments are not exhaustive and are not intended to limit the disclosure. Individual features of a particular embodiment are not generally limited to that particular embodiment but can be used in other embodiments even if not specifically shown or described. Other embodiments may be utilised and modifications may be made without departing from the scope of the invention. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented video processing method, comprising:
receiving, at a question-answering system, a question input conveying a question about a video, and initial video data comprising frames obtained from the video at a first frame rate;
determining, by the question-answering system, whether or not the question can be answered using the initial video data, and
if it is determined that the question cannot be answered using the initial video data:
receiving, at the question-answering system, further video data comprising frames obtained from the video at a second frame rate, wherein the second frame rate is higher than the first frame rate; and
determining, by the question-answering system, a question-answering output, wherein the question-answering output conveys an answer to the question, wherein determining the question-answering output comprises the question-answering system processing the further video data; and
outputting the question-answering output from the question-answering system.

2. The computer-implemented video processing method of claim 1, wherein the question-answering system comprises a planner configured for requesting the further video data.

3. The computer-implemented video processing method of claim 2, further comprising the planner identifying one or more parameters for the further video data.

4. The computer-implemented video processing method of claim 3,
wherein the one or more parameters identify one or more time segments of the video from which the frames obtained from the video at the second frame rate are to be extracted, or
wherein the one or more parameters identify the second frame rate.

5. The computer-implemented video processing method according to claim 2, comprising the planner generating an output to request the further video data from a video content provision system, wherein the video content provision system is configured to extract frames from the video at the second frame rate.

6. The computer-implemented video processing method according to claim 2, wherein the planner comprises a Visual Language Model (VLM).

7. The computer-implemented video processing method of claim 1, wherein if it is determined that the question can be answered using the initial video data then the method comprises:
determining, by the question answering system, a question-answering output using the initial video data, wherein the question answering output conveys an answer to the question; and
outputting the question-answering output determined using the initial video data from the question-answering system, wherein the question-answering system optionally comprises a question-answering model, and wherein determining, by the question-answering system, the question-answering output using the initial video data comprises the question-answering model determining the answer to the question based on tokenized video data derived from the initial video data.

8. The computer-implemented video processing method according to claim 1,
wherein the question-answering system comprises a question-answering model, and wherein the question-answering system processing the further video data comprises the question-answering model determining the answer to the question based on tokenized video data derived from the further video data.

9. The computer-implemented video processing method of claim 2, wherein determining whether or not the question can be answered using the initial video data comprises the planner determining whether or not the question can be answered using the initial video data.

10. The computer-implemented video processing method of claim 1, wherein the question-answering system processing the further video data comprises determining, by the question-answering system, whether or not the question can be answered using the further video data.

11. The computer-implemented video processing method of claim 2, wherein the question-answering system processing the further video data comprises the planner determining whether or not the question can be answered using the further video data.

12. The computer-implemented video processing method of claim 2, wherein processing the further video data forms part of an iterative loop, wherein the iterative loop comprises the planner identifying subsequent parameters for extracting subsequent frames from the video and the question-answering system receiving the subsequent frames and determining whether or not the question can be answered using the subsequent frames, wherein the iterative loop is performed until the question-answering system determines that the question can be answered using the subsequent frames.

13. The computer-implemented video processing method of claim 12,
wherein determining whether or not the question can be answered using the subsequent frames comprises the planner determining whether or not the question can be answered using the subsequent frames, or
wherein the subsequent parameters comprise a subsequent frame rate for extracting the frames from the video, and wherein each time the iterative loop is performed the planner increases the subsequent frame rate, wherein the subsequent frame rate is optionally higher than the second frame rate, or
wherein each time the iterative loop is performed the planner identifies one or more time segments of the video from which the subsequent frames are to be extracted.

14. A system comprising one or more computers and one or more storage devices storing instructions that when executed by the one or more computers cause the one or more computers to perform a video processing method comprising a method according to any preceding claim.

15. A computer program product comprising instructions which, when the program is executed by one or more computers cause the one or more computers to carry out a video processing method comprising a method according to any one of claims 1 to 13.
